# EUROPEAN PATENT SPECIFICATION

(11) **EP 3 471 583 B1**
(45) Date of publication and mention of the grant of the patent: **01.07.2020**
(21) Application number: 17730167.8
(22) Date of filing: 14.06.2017
(51) Int. Cl.: A47J 27/04

(54) **METHOD FOR CONTROLLING ELECTRIC COOKERS**
VERFAHREN ZUR STEUERUNG EINES ELEKTRISCHEN KOCHERS
PROCÉDÉ DE COMMANDE DE CUISEURS ÉLECTRIQUES

(30) Priority: 15.06.2016 CN 201610430485
(43) Date of publication of application: 24.04.2019
(73) Proprietor: SEB S.A., 69130 Ecully (FR)
(72) Inventor: MA, Chao, Hangzhou Zhejiang 310051 (CN); LU, Hua, Hangzhou Zhejiang 310051 (CN); GOYON, Annabelle, 30980 Saint-Dionisy (FR)
(74) Representative: Bourrières, Patrice
(86) International application number: PCT/EP2017/064648
(87) International publication number: WO 2017/216277

(56) References cited:
- CN-A- 1 157 708
- CN-A- 105 212 679
- CN-U- 203 914 529
- JP-A- 2006 158 802
- JP-A- 2016 047 483
- JP-A- 2016 087 123
- JP-A- 2016 093 358

## Description

### Technical Field

The present invention relates to the field of cooking equipment and in particular to a method for controlling electric cookers.

### Background Art

Electric cookers of the prior art are inbuilt with an internal pot, which is in turn equipped with a steamer. The rice is placed within the steamer, and water is contained within the internal pot. Electric cookers of the prior art are controlled by heating the water inside the internal pot until it boils, which causes the rice inside the steamer to come into contact with and absorb the water. The rice is then steamed until it is cooked to produce low-GI (Glycemic index) cooked rice.

However, the electric cooker control method of the prior art cannot ensure adequate water enters the steamer. This means the rice inside the steamer may not come into contact with the water, and hence cannot be effectively washed or cannot absorb adequate amount of water, which compromises the taste of the cooked rice. Furthermore, the control method of the prior art is also unable to ensure the effective separation of the rice and water, and hence only a small amount of sugar is carried away by the water. It is therefore difficult to produce cooked rice with low-GI (Glycemic index).

Electric cookers of the prior art present some operational inadequacies. Since water is boiled within the internal pot, if the operational duration of and control over the heating element are not properly managed, it can lead to over-spilling of the water from the internal pot due to vigorous boiling, which in turn presents a safety hazard. At the same time, due to vigorous boiling, the water is unable to come into stable contact with the rice, and this affects absorption of water by the rice, and hence compromises the taste of the cooked rice.

The document JP 2006 158802 A discloses an electric rice cooker.

### Summary

The main object of the present invention is to provide an effective method for controlling electric cookers that can lower the GI value and improve the taste of cooked rice.

To achieve the above object, the present invention provides a method for controlling electric cookers, wherein the cooker comprises an internal pot, a heating element, a pressure regulating unit, a spill detection unit and a steamer built within the internal pot. In this method, the heating element heats up the internal pot, and the bottom of the steamer has an open structure that extends towards the bottom wall and/or side wall of the internal pot. The steamer comprises a water permeable area and a bearing cavity positioned above the water permeable area. The open top space formed by the open structure is interconnected with the bearing cavity through the water permeable area, the detection end of the spill detection unit is interconnected with the bearing cavity, and the top of the steamer is interconnected with the mouth of the internal pot. The method of controlling the electric cooker comprises the following steps: during soaking treatment, the heating element of the electric cooker heats up the internal pot, and the pressure regulating unit regulates the pressure difference between the bearing cavity and the separating cavity formed by the external surface of the steamer and the internal wall of the internal pot, so as to push water from the internal pot into the bearing cavity to soak the rice contained within the bearing cavity. After maintaining this status up to a fourth preset time t4, the pressure regulating unit adjusts the pressure difference between the bearing cavity and the separating cavity to return the water back into the internal pot; during the rice washing and cooking step, in a single rice wash-and-cook cycle, the heating element heats up the internal pot of the electric cooker until the spill detection unit comes into contact with boiling water, at this point, the heating element stops operating and the cooker continues with the wash-and-cook cycle up to the first preset time t1, and this cycle is repeated N1 times; the cooker then enters the rice-steaming step, in which the heating element heats up the internal pot again.

Further, during the soaking treatment, after the heating element is activated and the temperature of the water within the internal pot reaches a preset temperature T, the pressure regulating unit adjusts the pressure difference between the bearing cavity and separating cavity to push water from the internal pot into the bearing cavity to soak the rice within the bearing cavity. After this is maintained up to the fourth preset time t4, the pressure regulating unit adjusts the pressure difference between the separating cavity and bearing cavity to return the water back into the internal pot.

Further, during the soaking treatment, when the heating element is activated, the pressure regulating unit is also activated at the same time to push water into the bearing cavity; after temperature of the water in the internal pot reaches a preset temperature T and the operation is maintained up to the fourth preset time t4, the pressure regulating unit adjusts the pressure difference between the separating cavity and the bearing cavity to return the water back into the internal pot.

Further, during the single rice wash-and-cook cycle, the first preset time t1 is at least 3 seconds but at most 150 seconds, and N1 is at least 2 but at most 100.

Further, during the single rice wash-and-cook cycle, the first preset time t1 is at least 5 seconds but at most 100 seconds, and N1 is at least 4 but at most 80.

Further, during the entire rice-steaming step, the heating element heats up the internal pot continuously until the rice is cooked through steaming.

Further, during a single rice steaming cycle, after the heating element heats up the internal pot up to a second preset time t2. The heating element then stops operating and the cooker continues with rice steaming until the third preset time t3. This rice steaming cycle is repeated N2 times.

Further, during a single rice steaming cycle, the second preset time t2 is at least 3 seconds but at most 150 seconds, the third present time t3 is at least 3 seconds but at most 150 seconds, and N2 is at least 2 and at most 100.

Further, N2 is at least 4 and at most 80.

Further, the entire rice steaming step is divided into the preliminary rice stage and the final rice steaming stage according to sequence in time, wherein in the preliminary rice steaming stage, the heating element heats up the internal pot for up to a second preset time t2 known as t21, while in the final rice steaming stage, the heating element heats up the internal pot up to a second preset time t2 known as t22, and t21 is longer than t22.

Further, t21 is at least 3 seconds but at most 150 seconds; t22 is at least 3 seconds but at most 150 seconds.

Further, during the soaking treatment, the fourth preset time t4 is at least 120 seconds and at most 1200 seconds, and the preset temperature T is at least 30 degree Celsius and at most 95 degree Celsius.

Further, during the soaking treatment, the fourth preset time t4 is at least 600 seconds and at most 900 seconds, and the preset temperature T is at least 60 degree Celsius and at most 80 degree Celsius.

Further, during the soaking treatment, the electric cooker monitors the temperature of the water through the spill detection unit.

Further, during said soaking treatment, when the spill detection unit fails to come into contact with water within the preset alarm time, the spill detection unit will send an alarm signal, and the controller of the electric cooker will receive this alarm signal and control the sounding of alarm by the alarm element in said electric cooker.

Further, during said soaking treatment, after the pressure regulating unit is activated, it causes the pressure within the separating cavity to rise to a first preset pressure P1 or the pressure within the bearing cavity to decrease to a second preset pressure P2.

Further, the first preset pressure P1 is at least 5Pa and at most 1500Pa, and the second preset pressure P2 is at least -5000Pa and at most -5Pa.

Further, the first preset pressure P1 is at least 10Pa and at most 1100Pa.

Applying the technical solution of the present invention, during the soaking treatment, the pressure regulating unit regulates the pressure difference between the bearing cavity and the separating cavity formed by the exterior wall of the steamer and the interior wall of the internal pot to push water from the internal pot into the bearing cavity to soak the rice contained within the bearing cavity, and after maintaining this status up to the fourth present time t4, the pressure regulating unit regulates the pressure difference between the bearing cavity and separating cavity to return the water back into the internal pot; during a single rice wash-and-cook cycle, the heating element heats up the internal pot until the spill detection unit comes into contact with boiling water, at this point, the heating element will stop operating and the cooker will continue with the wash-and-cook cycle up to the first preset time t1, and this cycle is repeated N1 times; the cooker then enters the rice-steaming step, in which the heating element heats up the internal pot again.

By controlling when the heating element is turned on and off and controlling the pressure regulating unit, factors such as water temperature, the number of times the rice comes into contact with water, and the duration for which the water is retained within the bearing cavity can be effectively controlled, and the electric cooker can automatically subject the rice to washing and water absorption, as well as complete the cooking of the rice through boiling followed by steaming. The cooker is hence able to produce cooked rice with low GI and improved taste and nutritional value, which generates a higher level of satisfaction among its users.

Hence, through the control method described above, the operation of the electric cooker can be effectively controlled to offer advantages such as providing multiple functions, and high levels of automation and usability.

### Description of the Drawings

The drawings constitute a portion of the Description for further understanding of the present invention. These drawings illustrate the embodiments of the present invention and explain the principle of the present invention together with the Description. They are not intended to limit the scope of the invention. In the drawings:
FIG. 1 is a schematic view of an optional embodiment of an electric cooker of the present invention;
FIG. 2 depicts the relative positions of the internal pot, steamer and spill detection unit in FIG. 1 before the rice comes into contact with water;
FIG. 3 depicts the relative positions of the internal pot, steamer and spill detection unit in FIG. 1 when water comes into contact with the rice and spill detection unit;
FIG. 4 is a flowchart depicting the method of controlling electric cookers in an optional specific embodiment. With reference to the above Figures, wherein like parts are indicated by like reference numbers: 10. Internal pot; 20. Steamer; 21 Open structure; 211. Open top space; 22. Water permeable area; 23. Bearing cavity; 30. Separating cavity; 40. Spill detection unit; 50. External housing; 60. Top cover; 70. First sealing ring; 80. Heating element.

### Detailed Description

It should be noted that the particular features of any specific embodiment may be combined in any suitable manner with one or more other specific embodiments. Representative embodiments of the present invention are explained hereinafter with reference to the accompanying drawings.

It is to be understood that the following detailed description are exemplary and explanatory, and are intended to provide further explanation of the invention. Unless otherwise defined, all terms (including technical and scientific terms) used herein have the same meaning as commonly understood by one of ordinary skill in the art to which this invention belongs.

In the present invention, terms indicating orientation or direction, such as "up, down, top or bottom" are not intended to be absolute terms unless the context requires or indicates otherwise. These terms will normally refer to orientations shown in the drawings. Similarly, to facilitate understanding and description, "internal" and "external" refer to a positioning with respect to the boundary of the part itself. The above terms are not intended to restrict the scope of this invention.

The present invention provides an effective method for controlling electric cookers, which can lower the GI value and improve the taste of cooked rice.

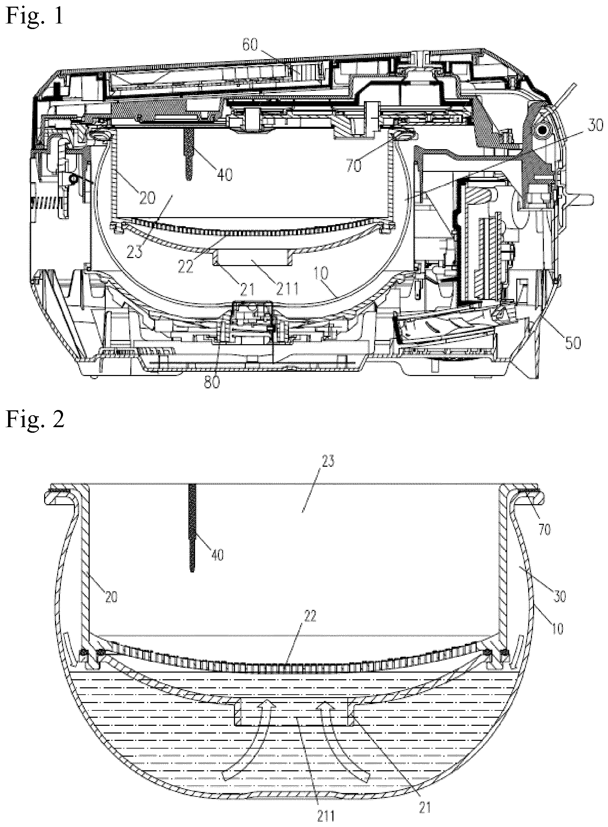

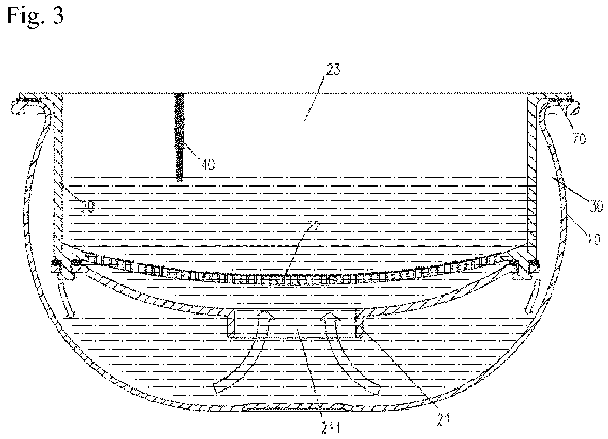

As shown in FIG. 1 to 3, the electric cooker comprises internal pot 10, heating element 80, pressure regulating unit, spill detection unit 40, steamer 20 housed within internal pot 10, and heating element 80 heats up the internal pot 10, the bottom of steamer 20 has an open structure 21 that extends towards the bottom wall and/or side wall of internal pot 10, steamer 20 comprises water permeable area 22 and a bearing cavity 23 positioned above water permeable area 22, open top space 211 formed by open structure 21 is interconnected with the bearing cavity 23 through the water permeable area 22, the detection end of spill detection unit 40 is interconnected with bearing cavity 23, and the top of steamer 20 is interconnected with the mouth of internal pot 10.

Optionally, the top of steamer 20 can be connected to the mouth of internal pot 10 through a sealed connection. This effectively ensures that when pressure within separating cavity 30 rises, the water is pushed smoothly through open structure 21 into bearing cavity 23 by the steam, and steam is prevented from escaping through the top of steamer 20 and the mouth of internal pot 10.

As shown in FIG. 1, the top of steamer 20 and the mouth of internal pot 10 are sealed using first sealing ring 70.

As shown in FIG. 1, the electric cooker further comprises external housing 50 and top cover 60, and internal pot 10 is housed within external housing 50; top cover 60 is positioned on external housing 50, and the first end of spill detection unit 40 is connected with top cover 60, while the second end of spill detection unit 40 extends towards the bottom wall of internal pot 10.

Optionally, the second end of spill detection unit 40 is the detection end. The electric cooker described above is an electric rice cooker, but can also be a microwave, electric slow cooker or electric pressure cooker. Optionally, heating element 80 is a heating device selected from the group comprising a heating plate, heating tube, IH electromagnetic heating device and heating film.

Optionally, spill detection unit 40 is a probe selected from the group comprising a spill detection probe, temperature probe, water level detector, infrared probe and ultrasound probe. This means that in addition to the probes and detectors listed above, any sensor that can detect water level or the rise in water level may also be used as spill detection unit 40.

It should be noted that before using the electric cooker of the present invention, rice must be added to bearing cavity 23 of steamer 20, and water must be added to internal pot 10.

When controlling the electric cooker of the structure described above, the method of control comprises the following steps: heating element 80 of heats up internal pot 10 of the cooker, and the pressure-regulating element controls the difference in pressures between bearing cavity 23 and separating cavity 30, which is formed by the external surface of steamer 20 and the internal wall of internal pot 10, to push water from internal pot 10 into bearing cavity 23 to soak to rice contained within bearing cavity 23, and after maintaining the soaking up to the fourth preset time t4, the pressure-regulating element adjusts the pressure difference between separating cavity 30 and bearing cavity 23 to draw water back into internal pot 10; during the rice washing and cooking step, in a single rice wash-and-cook cycle, heating element 80 heats up internal pot 10 within the electric cooker until spill detection unit 40 comes into contact with boiling water, and at this point, heating element 80 stops operating and the cooker continues with the wash-and-cook cycle up to the first preset time t1, and this cycle is repeated N1 times; during the rice steaming step, heating element 80 heats up internal pot 10 again.

It should be noted that during the soaking treatment, the electric cooker monitors the temperature of the water through spill detection unit 40. Hence, when water level in bearing cavity 23 gradually rises, water will come into contact with spill detection unit 40. When temperature of the rising water falls within the preset range of temperature T, spill detection unit 40 will be able to detect the water temperature. When spill detection unit 40 detects that water temperature has risen beyond the preset range of temperature T, it will emit a spill prevention signal to stop the heating of the heating element.

Optionally, during the soaking treatment, the preset temperature T is at least 30 degree Celsius and at most 95 degree Celsius.

Further optionally, during the soaking treatment, the preset temperature T is at least 60 degree Celsius and at most 80 degree Celsius.

It should be noted that during soaking treatment, as water temperature is lower than that at boiling, spill detection unit 40 will not emit a spill prevention signal even if the water level reaches the unit, and the heating of heating element 80 will not be stopped by triggering spill detection unit 40.

It should also be noted that as heating continues, there is a risk of water spillage, which poses a potential safety hazard. For more effective cooking of the rice and to prevent spillage, water level in bearing cavity 23 is detected using spill detection unit 40. When water level rises and water comes into contact with spill detection unit 40, the operation of heating element 80 is stopped or the power of heating element 80 is reduced, and this lowers the water level and prevents spillage. When the water level falls below the detection range of spill detection unit 40, heating of heating element 80 is started again to ensure that the rice in bearing cavity 23 comes into adequate contact with water and absorbs a sufficient amount of water, and the rice washing and cooking step is completed in cycles.

Further, with the completion of the rice washing and cooking step, water is absorbed by the rice, and water level falls to a point where it is no longer possible to cover open top space 211. At this time, separating cavity 30 is still interconnected with bearing cavity 23. As internal pot 10 continues to be heated, water will no longer be pushed into bearing cavity 23. At this time, only the rising steam will enter bearing cavity 23 from open structure 21 to steam the rice.

This means that through controlling when heating element 80 is turned on and off and controlling the pressure regulating unit, factors such as water temperature, the number of times the rice comes into contact with water, and the duration for which the water is retained within bearing cavity 23 can be effectively controlled, and the electric cooker can automatically subject the rice to washing and water absorption, as well as complete the cooking of the rice through boiling followed by steaming. The cooker is hence able to produce cooked rice with low GI, and improve on the taste and nutritional value of the cooked rice, which generates a higher level of satisfaction among the users.

In the electric cookers of this structure, changes in level and temperature of the water in bearing cavity 23 are detected using spill detection unit 40, which in turn controls when heating element is turned on or off. Through the operation of the pressure regulating unit, water from the internal pot is pushed rapidly into bearing cavity 23 to soak the rice contained within bearing cavity 23.

Hence, through the control method described above, the operation of the electric cooker can be effectively controlled to offer advantages such as providing multiple functions, and high levels of automation and usability.

Hereinafter, two different control methods, which differ in the soaking processes, will be described.

In the first method, during the soaking treatment, heating element 80 is first activated and when the temperature of the water in internal pot 10 reaches a preset temperature T, the pressure regulating unit adjusts the pressure difference between separating cavity 30 and bearing cavity 23, which pushes water from internal pot 10 into bearing cavity 23 to soak the rice contained within bearing cavity 23 up to the fourth preset time t4, after which, the pressure regulating unit adjusts the pressure difference between separating cavity 30 and bearing cavity 23 to return the water to the internal pot 10. Hence, by activating heating element 80 before the pressure regulating unit, the water can be heated first to ensure that it is of a certain temperature when it comes into contact with the rice. This facilitates the washing and cooking of the rice, and at the same time, ensures that water comes into contact with the rice and soaks the rice, and the rice absorbs an adequate amount of water.

In the second method, during the soaking treatment, when heating element 80 is activated, the pressure regulating unit is also activated at the same time to push water into bearing cavity 23; after temperature of the water in internal pot 10 reaches a preset temperature T and the operation is maintained up to the fourth preset time t4, the pressure regulating unit adjusts the pressure difference between separating cavity 30 and bearing cavity 23 to return the water to internal pot 10. As it takes some time for heating element 80 to increase the temperature of the water, after the pressure regulating unit is activated, water will be directly sucked into bearing capacity 23 such that it will come into contact with and soak the rice before it is being heated. This facilitates absorption of water by the rice. When water is boiled, the rice will be cooked.

When implementing both methods described above, during soaking treatment, when spill detection unit 40 fails to come into contact with water within the preset alarm time, it will send an alarm signal, and the controller of the electric cooker will receive this alarm signal and control the sounding of alarm by the alarm element in the electric cooker. This means that during the soaking treatment, if the spill detection unit does not detect the rise in water level, the controller will trigger sounding of the alarm by the alarm element, to alert the user to make suitable adjustments.

It should be noted that the preset alarm time is determined by those skilled in the art based on limited tests. The water would not have reached its boiling state within the preset alarm time.

The first and second control methods can be implemented on electric cookers of two different structures. Different pressure regulating units can be selected to create the pressure difference between bearing cavity 23 and separating cavity 30. Specially, the pressure regulating unit can be a booster pump or a pressurization pump.

If the pressure regulating unit is a booster pump, during said soaking treatment, after the booster pump is activated, it causes the pressure within separating cavity 30 to rise to a first preset pressure P1, or the pressure within bearing cavity 23 to decrease to a second preset pressure P2.

Optionally, the first preset pressure P1 is at least 5Pa and at most 1500Pa, and the second preset pressure P2 is at least -5000Pa and at most -5Pa.

Further optionally, the first preset pressure P1 is at least 10Pa and at most 1100Pa.

Optionally, during the soaking treatment, the fourth preset time t4 is at least 120 seconds and at most 1200 seconds.

Further optionally, during the soaking treatment, the fourth preset time t4 is at least 600 seconds and at most 900 seconds.

After the soaking treatment is completed, the electric cooker will enter the rice washing and cooking step.

During a single rice wash-and-cook cycle, the first preset time t1 is at least 3 seconds and at most 150 seconds, and N1 at least 2 and at most 100.

Further optionally, in a single rice wash-and-cook cycle, the preset time t1 is at least 5 seconds but at most 100 seconds, and N1 is at least 4 but at most 80.

Thereafter, the cooker enters the rice steaming step. Two different control methods are provided below.

In the first method, heating element 80 heats up internal pot 10 continuously throughout the entire rice-steaming step until the rice is cooked through steaming. This method of control is relatively simple, and is especially suitable for cases in which the rice has absorbed a sufficient amount of water during the washing and cooking step, and the water level within internal pot 10 is low.

In the second method, during a single rice steaming cycle, after heating element 80 heats up internal pot 10 for a preset time t2, heating element 80 stops operating and the cooker continues with rice steaming until the preset time t3, and the rice steaming cycle is repeated N2 times. It should be noted that after the washing and cooking step, there may be still substantial amount of water remaining in internal pot 10. At this point, to ensure that the water in internal pot 10 will not enter open structure 21 and cause an imbalance of pressure between separating cavity 30 and bearing cavity 23, the turning on and off of heating element 80 must be controlled. This will ensure that water will not enter the open structure 21, and bearing cavity 23 and separating cavity 30 remain connected. In this manner, not only is heating efficiency ensured during the rice steaming process, the rice is also prevented from coming into contact with water, hence increasing the reliability of the rice steaming operation.

Optionally, during a single rice steaming cycle, the second preset time t2 is at least 3 seconds but at most 150 seconds, the third present time t3 is at least 3 seconds but at most 150 seconds, and N2 is at least 2 and at most 100.

Further optionally, N2 is at least 4 and at most 80.

To improve the taste of the cooked rice and to enhance the performance of the electric cooker, the entire rice steaming step is divided into the preliminary rice steaming stage and the final rice steaming stage according to sequence in time. In the preliminary rice steaming stage, rice steaming is repeated for N21 times; in the final rice steaming stage, rice steaming is repeated N22 times, and N2 is the sum of N21 and N22, and N21 is at least 2 and at most 100, and N22 is at least 2 and at most 100. The entire rice steaming step is divided into two stages, which are independently operated and controlled, to improve the operational reliability of the electric cooker and the taste of the cooked food.

Optionally, N21 is at least 4 and at most 80; N22 is at least 4 and at most 80. It should be noted that, in the preliminary rice steaming stage, heating element 80 heats up internal pot 10 for a second present time t2 known as t21. During this stage, controlling the duration of water boiling can ensure that sufficient steam is produced within internal pot 10, which can keep the rice in the electric cooker under high-temperature steaming conditions, and at the same time, prevent the boiling water from rising and coming into contact with the rice. Hence, t21 must be longer.

Optionally, t21 is at least 3 seconds but at most 150 seconds.

In the same preliminary rice steaming stage, heating element 80 stops operating and rice steaming is continued up to a third preset time t3 known as t31. During this stage, heating element 80 stops heating up for a period of time to prevent the boiling water from generating excessive amounts of steam. Excessive steam can cause the pressure within separating cavity 30 to become to o large, and in turn lead to spilling of water. Hence, this is an effective means of preventing spillage and conserving energy.

Optionally, t31 is at least 3 seconds but at most 150 seconds.

It should be noted that in the final rice steaming stage, heating element 80 heats up internal pot 10 for a second present time t2, which is known as t22, and t21 is longer than t22. This is because as rice steaming progresses, water is constantly evaporated into steam, and the concentration of the rice milk in internal pot 10 increases continuously. Under heating, the rice milk is more prone to escaping into bearing cavity 23 and coming into contact with the rice, which will compromise the moisture content and GI value of the cooked rice. Hence, t21 must be longer than t22.

Optionally, t22 is at least 3 seconds but at most 150 seconds.

Additionally, in the final rice steaming stage, as water evaporates into steam, the concentration of the liquid in internal pot 10 increases. When highly concentrated water is heated, it is prone to bubbling and spilling. Hence, the heating of heating element 80 must be stopped while rice steaming continues up to a preset time t3 known as t32. This means that after heating element 80 is continuously heated up to t22, the heating of heating element 80 should be stopped and rice steaming allowed to continue up to t32, so as to reduce the pressure within separating cavity 30 and prevent water from being pushed towards the rice.

Optionally, t32 is at least 3 seconds but at most 150 seconds.

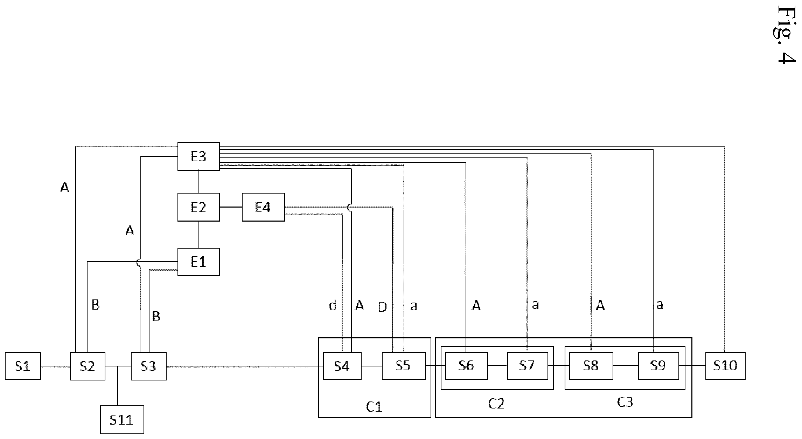

FIG. 4 is a flowchart depicting the method of controlling electric cookers in an optional specific embodiment, wherein different steps and elements of the flowchart are represented by following references:

| | |
|---|---|
| S1: Place a certain amount of water into the internal pot | |
| S2: Put in the steamer, place rice into steamer, the rice cooker begins to get heated | |
| S3: Water temperature is maintained at the preset temperature T up to the fourth preset time t4 | |
| S4: Water in the internal pot is heated and boiled | |
| S5: Water in the internal pot stops getting heated, and the contents of the pot is held up to the first preset time t1 | |
| S6: Water in the internal pot is heated and boiled, and this status is maintained up to the first preset time t21 | |
| S7: Water in the internal pot stops getting heated, and this status is maintained up to the first preset time t31 | |
| S8: Water in the internal pot is heated and boiled, and this status is maintained up to the first preset time t22 | |
| S9: Water in the internal pot stops getting heated, and this status is maintained up to the first preset time t32 | |
| S10: Electric cooker stops operating | |
| S11: Water is heated up to the preset temperature T | |
| E1: Pressure regulating unit | A: Powered |
| E2: Controller | a: Not powered |
| E3: Heating element | B: Opened |
| E4: Spill detection unit | d: Not detected |
| C1: Cycle repeated N1 times | D: detected |
| C2: Cycle repeated N21 times | C3: Cycle repeated N22 times |

With reference to FIG. 4, when the pressure regulating unit is a booster pump, the booster pump is directly connected to separating cavity 30. The booster pump is first switched to the first working position, and the pressure within separating cavity 30 will be raised to and then maintained at the first preset pressure P1, such that water from internal pot 10 will be pushed into bearing cavity 23 through open structure 21 to come into contact with the rice there. Next, the booster pump is switched to its second working position, and the pressure within separating cavity 30 is lowered so that it becomes equal to that in bearing cavity 23. This causes the water within bearing cavity 23 to flow out of bearing cavity 23 and back into internal pot 10 through open structure 21.

To use an electric cooker of this structure, rice must be first placed within steamer 20, and water must be added into internal pot 10. Next, heating element 80 is activated first, and when temperature of the water in internal pot 10 is raised to the preset temperature T, the booster pump will be activated. The booster pump then pumps air into separating cavity 30 to increase the pressure within it. As pressure within separating cavity 30 rises, water is continuously pushed into bearing cavity 23. When the pressure within separating cavity 30 rises to the first preset pressure P1, pressure is maintained at P1 until the fourth preset time t4. During this time, the rice is completely immersed in water. When the fourth preset time is reached and the pressure within separating cavity 30 is equal to that in bearing cavity 23, the booster pump will stop working, and heating element 80 will heat up the water. The electric cooker then enters the rice washing and cooking step.

In this specific embodiment, when the electric cooker is in the rice steaming step, the on and off times of heating element 80 need not be entirely regular. This means that the heating duration and stopping duration of heating element 80 can be optimized based on the progress of cooking, such that on and off times of heating element 80 vary between cycles.

Table 1 below shows the method of controlling the electric cooker during the rice steaming step.

**Table 1. Method of controlling the electric cooker during the rice steaming step**

| | Rice steaming step | | | |
|---|---|---|---|---|
| No. of times | Preliminary rice steaming stage | | Final rice steaming stage | |
| | t21 (seconds) | t31 (seconds) | t22 (seconds) | t32 (seconds) |
| 1 | 35 | 10 | 3 | 14 |
| 2 | 3 | 8 | 63 | 3 |
| 3 | 75 | 30 | 85 | 27 |
| 4 | 68 | 35 | 86 | 38 |
| 5 | 105 | 65 | 89 | 52 |
| 6 | 115 | 58 | 107 | 66 |
| 7 | 118 | 70 | 125 | 65 |
| 8 | 130 | 90 | 156 | 83 |
| 9 | 145 | 85 | | |
| 10 | 150 | 98 | | |

Using an electric cooker of the structure described above and controlling the operation of the electric cooker through the control method described above allow the electric cooker to be equipped with multiple functions such as rice washing, cooking and steaming, etc. At the same, the cooked rice has low GI, which increases the level of user satisfaction.

With reference to FIG. 4, when the pressure regulating unit is a depressurisation pump, the depressurisation pump is directly connected to bearing cavity 23. The depressurisation pump is first switched to the first working position, and the pressure within bearing cavity 23 is lowered to and then maintained at the second preset pressure P2, such that water from internal pot 10 will be pushed into bearing cavity 23 through open structure 21 to come into contact with the rice there. Next, the depressurisation pump is switched to its second working position, and the pressure within separating cavity 30 is lowered so that it becomes equal to that in bearing cavity 23. This causes the water within bearing cavity 23 to flow out of bearing cavity 23 and back into internal pot 10 through open structure 21.

To use an electric cooker of this structure, rice must be first placed within steamer 20, and water must be added into internal pot 10. Next, heating element 80 will be activated. When temperature of the water in internal pot 10 reached the preset temperature T, the depressurization pump will be activated, and the pump begins to suck air from bearing cavity 23 to reduce its pressure. This in turn causes water to be sucked into bearing cavity 23 to come into contact with the rice there. The pressure within bearing cavity 23 is then lowered to the second present pressure P2, and maintained at P2 up to the fourth preset time t4. During this time, the rice is completely immersed in water. When the fourth preset time is reached and the pressure within separating cavity 30 is equal to that in bearing cavity 23, the depressurization pump will stop working, and heating element 80 will heat up the water. The electric cooker then enters the rice washing and cooking step.

It should be noted that technological terms used herein are merely used to describe a specific embodiment, but not to limit the present invention. In this application, the terms "comprising" and "including" should not be construed to necessarily include all of the elements or steps disclosed herein, and should be construed not to include some of the elements or steps thereof, or should be construed to further include additional elements or steps and/or combinations thereof.

Terms including an ordinal number such as first or second may be used to describe various components, but the terms need not necessarily indicate a specific sequence or order. It should be understood that the above terms are interchangeable, where appropriate, such that the specific embodiments described herein can be implemented in orders or sequences other than those indicated in the figures and descriptions contained herein.

## Claims

1. Method for controlling electric cookers, comprising an internal pot (10), a heating element (80), a pressure regulating unit, a spill detection unit (40), a steamer (20) housed within said internal pot (10), and said heating element (80) heats up said internal pot (10), the bottom of said steamer (20) has an open structure (21) that extends towards the bottom wall and/or side wall of said internal pot (10); said steamer (20) comprising a water permeable area (22) and a bearing cavity (23) positioned above said water permeable area (22), an open top space (211) formed by said open structure (21) is interconnected with said bearing cavity (23) through said water permeable area (22), the detection end of the spill detection unit (40) is interconnected with said bearing cavity (23), and the top of said steamer (20) is interconnected with the mouth of said internal pot (10); said method of controlling electric cookers comprises the following steps:
a soaking treatment, during which the heating element (80) of said electric cooker heats up internal pot (10) of said cooker, and said pressure regulating unit controls the pressure difference between said bearing cavity (23) and separating cavity (30), which is formed by the external surface of said steamer (20) and the internal wall of said internal pot (10), to push water from said internal pot (10) into said bearing cavity (23) to soak the rice contained within bearing cavity (23), and after maintaining the soaking up to a fourth preset time (t4), said pressure regulating unit adjusts the pressure difference between said separating cavity (30) and said bearing cavity (23) to draw water back into said internal pot (10);
a rice washing and cooking step, during which, in a single rice wash-and-cook cycle, said heating element (80) heats up the internal pot (10) within said electric cooker until said spill detection unit (40) comes into contact with boiling water, and at this point, said heating element (80) will stop operating and the cooker continues with the single rice wash-and-cook cycle to a first preset time (t1), and this cycle is repeated N1 times;
rice steaming, during which said heating element (80) heats up internal pot (10) in said electric cooker.

2. Method according to Claim 1, wherein during said soaking treatment, said heating element (80) is activated and when the temperature of the water in said internal pot (10) reaches a preset temperature (T), said pressure regulating unit adjusts the pressure difference between said separating cavity (30) and said bearing cavity (23), which pushes water from internal pot (10) into bearing cavity (23) to soak the rice contained within bearing cavity (23) up to the fourth preset time (t4), after which, said pressure regulating unit adjusts the pressure difference between separating cavity (30) and bearing cavity (23) to return the water to said internal pot (10).

3. Method according to Claim 1, wherein during said soaking treatment, when said heating element (80) is activated, said pressure regulating unit is also activated at the same time to push water into said bearing cavity (23); after temperature of the water in said internal pot (10) reaches a preset temperature (T) and the operation is maintained to said fourth preset time (t4), said pressure regulating unit adjusts the pressure difference between said separating cavity (30) and said bearing cavity (23) to return the water to said internal pot (10).

4. Method according to any of the Claims 1 to 3, wherein in a single rice wash-and-cook cycle, said first preset time (t1) is at least 3 seconds and at most 150 seconds, and said N1 is at least 2 and at most 100.

5. Method according to Claim 4, wherein in a single rice wash-and-cook cycle, said first preset time (t1) is at least 5 seconds and at most 100 seconds, and said N1 is at least 4 and at most 80. is at least 4 and at most 80.

6. Method according to Claim 1, wherein said heating element (80) heats up said internal pot (10) continuously throughout the entire period of said rice steaming step until the rice is cooked by steaming.

7. Method according to Claim 1, wherein during a single rice steaming cycle, after said heating element (80) heats up said internal pot (10) up to a second preset time (t2), said heating element (80) stops operating and the cooker continues with rice steaming until a third preset time (t3), and this rice steaming cycle is repeated N2 times.

8. Method according to Claim 7, wherein in a single rice steaming cycle, said second preset time (t2) is at least 3 seconds and at most 150 seconds, said third preset time (t3) is at least 3 seconds and at most 150 seconds, and said N2 is at least 2 and at most 100.

9. Method according to Claim 8, wherein said N2 is at least 4 and at most 80.

10. Method according to Claim 7, wherein the entire rice steaming step is divided into the preliminary rice steaming stage and the final rice steaming stage according to sequence in time, and
during said preliminary rice steaming stage, said heating element (80) heats up the internal pot (10) in said electric cooker for a second present time (t2) known as t21;
during said final rice steaming stage, said heating element (80) heats up the internal pot (10) in said electric cooker for a second present time (t2) known as t22, wherein t21 is longer than t22.

11. Method according to Claim 10, wherein said t21 is at least 3 seconds and at most 150 seconds, and said t22 is at least 3 seconds and at most 150 seconds.

12. Method according to Claim 2 or 3, wherein during said soaking treatment, said fourth preset time (t4) is at least 120 seconds and at most 1200 seconds, and said preset temperature (T) is at least 30 degree Celsius and at most 95 degree Celsius.

13. Method according to Claim 12, wherein during said soaking treatment, said fourth preset time (t4) is at least 600 seconds and at most 900 seconds, and said preset temperature (T) is at least 60 degree Celsius and at most 80 degree Celsius.

14. Method according to Claim 12, wherein during said soaking treatment, said electric cooker monitors the temperature of the water using said spill detection unit (40).

15. Method according to Claim 12, wherein during said soaking treatment, when said spill detection unit (40) fails to come into contact with water within the preset alarm time, said spill detection unit (40) will send an alarm signal, and the controller of said electric cooker will receive this alarm signal and control the sounding of alarm by the alarm element in said electric cooker.

16. Method according to any of the Claims 1 to 3, wherein during said soaking treatment, after said pressure regulating unit is activated, it causes the pressure within said separating cavity (30) to rise to a first preset pressure (P1) or the pressure within said bearing cavity (23) to decrease to a second preset pressure (P2).

17. Method according to Claim 16, wherein said first preset pressure (P1) is at least 5Pa and at most 1500Pa, and said second preset pressure (P2) is at least -5000Pa and at most -5Pa.

18. Method according to Claim 17, wherein said first preset pressure (P1) is at least 10Pa and at most 1100Pa.

## Patentansprüche

1. Verfahren zur Steuerung von elektrischen Kochern, umfassend einen inneren Topf (10), ein Heizelement (80), eine Druckregeleinheit, eine Überlauferfassungseinheit (40), einen in dem inneren Topf (10) untergebrachten Dampfgarer (20), und das Heizelement (80) erwärmt den inneren Topf (10), wobei der Boden des Dampfgarers (20) eine offene Struktur (21) aufweist, die sich zur Bodenwand und/oder Seitenwand des inneren Topfes (10) erstreckt; wobei der Dampfgarer (20) einen wasserdurchlässigen Bereich (22) und einen tragenden Hohlraum (23) umfasst, der über dem wasserdurchlässigen Bereich (22) angeordnet ist, ein durch die offene Struktur (21) gebildeter offener oberer Raum (211) mit dem tragenden Hohlraum (23) durch den wasserdurchlässigen Bereich (22) verbunden ist, das Erfassungsende der Überlauferfassungseinheit (40) mit dem tragenden Hohlraum (23) verbunden ist und das Obere des Dampfgarers (20) mit der Öffnung des inneren Topfes (10) verbunden ist; wobei das Verfahren zur Steuerung von elektrischen Kochern die folgenden Schritte umfasst:
eine Tränkbehandlung, während der das Heizelement (80) des elektrischen Kochers den inneren Topf (10) des Kochers erwärmt, und die Druckregeleinheit steuert die Druckdifferenz zwischen dem tragenden Hohlraum (23) und dem Trennhohlraum (30), der durch die Außenfläche des Dampfgarers (20) und die Innenwand des inneren Topfes (10) gebildet wird, um Wasser aus dem inneren Topf (10) in den tragenden Hohlraum (23) zu drücken, um den im tragenden Hohlraum (23) enthaltenen Reis zu tränken, und nachdem das Tränken bis zu einer vierten voreingestellten Zeit (t4) aufrechterhalten wurde, stellt die Druckregeleinheit die Druckdifferenz zwischen dem Trennhohlraum (30) und dem tragenden Hohlraum (23) ein, um Wasser in den inneren Topf (10) zurückzuziehen;
einen Reiswasch- und Kochschritt, während dessen in einem einzigen Reiswasch- und Kochzyklus das Heizelement (80) den inneren Topf (10) innerhalb des elektrischen Kochers aufheizt, bis die Überlauferfassungseinheit (40) mit kochendem Wasser in Kontakt kommt, und an diesem Punkt wird das Heizelement (80) den Betrieb stoppen und der Kocher mit dem einzelnen Reiswasch- und Kochzyklus bis zu einer ersten voreingestellten Zeit (t1) fortfahren, und dieser Zyklus wird N1-mal wiederholt;
Reisdämpfen, während dessen das Heizelement (80) den inneren Topf (10) im elektrischen Kocher aufheizt.

2. Verfahren nach Anspruch 1, wobei während der Tränkbehandlung das Heizelement (80) aktiviert wird und wenn die Temperatur des Wassers in dem inneren Topf (10) eine voreingestellte Temperatur (T) erreicht,
die Druckregeleinheit die Druckdifferenz zwischen dem Trennhohlraum (30) und dem tragenden Hohlraum (23) einstellt, die Wasser aus dem inneren Topf (10) in den tragenden Hohlraum (23) drückt, um den im tragenden Hohlraum (23) enthaltenen Reis bis zur vierten voreingestellten Zeit (t4) zu tränken, wonach die Druckregeleinheit die Druckdifferenz zwischen dem Trennhohlraum (30) und dem tragenden Hohlraum (23) einstellt, um das Wasser in den inneren Topf (10) zurückzubringen.

3. Verfahren nach Anspruch 1, wobei während der Tränkbehandlung, wenn das Heizelement (80) aktiviert wird, die Druckregeleinheit gleichzeitig auch aktiviert wird, um Wasser in den tragenden Hohlraum (23) zu drücken; nachdem die Temperatur des Wassers in dem inneren Topf (10) eine voreingestellte Temperatur (T) erreicht hat und der Betrieb bis zu der vierten voreingestellten Zeit (t4) aufrechterhalten wird, stellt die Druckregeleinheit die Druckdifferenz zwischen dem Trennhohlraum (30) und dem tragenden Hohlraum (23) ein, um das Wasser in den inneren Topf (10) zurückzuführen.

4. Verfahren nach einem der Ansprüche 1 bis 3, wobei in einem einzigen Reiswasch-und Kochzyklus die erste voreingestellte Zeit (t1) mindestens 3 Sekunden und höchstens 150 Sekunden beträgt und das N1 mindestens 2 und höchstens 100 beträgt.

5. Verfahren nach Anspruch 4, wobei in einem einzigen Reiswasch- und Kochzyklus die erste voreingestellte Zeit (t1) mindestens 5 Sekunden und höchstens 100 Sekunden beträgt und das N1 mindestens 4 und höchstens 80 ist. mindestens 4 und höchstens 80 ist.

6. Verfahren nach Anspruch 1, wobei das Heizelement (80) den inneren Topf (10) während der gesamten Dauer des Reisdämpfschrittes kontinuierlich erhitzt, bis der Reis durch Dämpfen gekocht ist.

7. Verfahren nach Anspruch 1, wobei während eines einzigen Reisdämpfzyklus, nachdem das Heizelement (80) den inneren Topf (10) bis zu einer zweiten voreingestellten Zeit (t2) aufgeheizt hat, das Heizelement (80) den Betrieb stoppt und der Kocher mit dem Reisdämpfen bis zu einer dritten voreingestellten Zeit (t3) fortfährt, und dieser Reisdämpfzyklus N2-mal wiederholt wird.

8. Verfahren nach Anspruch 7, wobei in einem einzigen Reisdämpfzyklus die zweite voreingestellte Zeit (t2) mindestens 3 Sekunden und höchstens 150 Sekunden beträgt, die dritte voreingestellte Zeit (t3) mindestens 3 Sekunden und höchstens 150 Sekunden beträgt, und das N2 mindestens 2 und höchstens 100 ist.

9. Verfahren nach Anspruch 8, wobei das N2 mindestens 4 und höchstens 80 beträgt.

10. Verfahren nach Anspruch 7, wobei der gesamte Reisdämpfschritt in die Reisdämpfvorstufe und die Reisdämpfendstufe gemäß der zeitlichen Abfolge unterteilt wird, und
während der Reisdämpfvorstufe heizt das Heizelement (80) den inneren Topf (10) im elektrischen Kocher für eine zweite, als t21 bekannte Zeit (t2) auf;
während der Reisdämpfendstufe heizt das Heizelement (80) den inneren Topf (10) in dem elektrischen Kocher für eine zweite, als t22 bekannte Zeit (t2), wobei t21 länger als t22 ist.

11. Verfahren nach Anspruch 10, wobei t21 mindestens 3 Sekunden und höchstens 150 Sekunden beträgt und t22 mindestens 3 Sekunden und höchstens 150 Sekunden beträgt.

12. Verfahren nach Anspruch 2 oder 3, wobei während der Tränkbehandlung die vierte voreingestellte Zeit (t4) mindestens 120 Sekunden und höchstens 1200 Sekunden beträgt und die voreingestellte Temperatur (T) mindestens 30 Grad Celsius und höchstens 95 Grad Celsius beträgt.

13. Verfahren nach Anspruch 12, wobei während der Tränkbehandlung die vierte voreingestellte Zeit (t4) mindestens 600 Sekunden und höchstens 900 Sekunden beträgt und die voreingestellte Temperatur (T) mindestens 60 Grad Celsius und höchstens 80 Grad Celsius beträgt.

14. Verfahren nach Anspruch 12, wobei während der Tränkbehandlung der elektrische Kocher die Temperatur des Wassers unter Verwendung der Überlauferfassungseinheit (40) überwacht.

15. Verfahren nach Anspruch 12, wobei während der Tränkbehandlung, wenn die Überlauferfassungseinheit (40) nicht innerhalb der voreingestellten Alarmzeit mit Wasser in Kontakt kommt, die Überlauferfassungseinheit (40) ein Alarmsignal sendet und die Steuerung des elektrischen Kochers dieses Alarmsignal empfängt und das Ertönen des Alarms durch das Alarmelement in dem elektrischen Kocher steuert.

16. Verfahren nach einem der Ansprüche 1 bis 3, wobei während der Tränkbehandlung nach Aktivierung der Druckregeleinheit der Druck innerhalb des Trennhohlraums (30) auf einen ersten voreingestellten Druck (P1) ansteigt oder der Druck innerhalb des tragenden Hohlraums (23) auf einen zweiten voreingestellten Druck (P2) abfällt.

17. Verfahren nach Anspruch 16, wobei der erste voreingestellte Druck (P1) mindestens 5 Pa und höchstens 1500 Pa beträgt und der zweite voreingestellte Druck (P2) mindestens -5000 Pa und höchstens -5 Pa beträgt.

18. Verfahren nach Anspruch 17, wobei der erste voreingestellte Druck (P1) mindestens 10 Pa und höchstens 1100 Pa beträgt.

## Revendications

1. Procédé de commande de cuiseurs électriques, comprenant un pot interne (10), un élément de chauffage (80), une unité de régulation de pression, une unité de détection de débordement (40), un cuiseur à vapeur (20) logé dans ledit pot interne (10), et ledit élément de chauffage (80) chauffant ledit pot interne (10), le fond dudit cuiseur à vapeur (20) ayant une structure ouverte (21) qui s'étend vers la paroi inférieure et/ou la paroi latérale dudit pot interne (10) ; ledit cuiseur à vapeur (20) comprenant une zone perméable à l'eau (22) et une cavité de palier (23) positionnée au-dessus de ladite zone perméable à l'eau (22), un espace supérieur ouvert (211) formé par ladite structure ouverte (21) étant interconnecté avec ledit palier de cavité (23) à travers ladite zone perméable à l'eau (22), l'extrémité de détection de l'unité de détection de débordement (40) étant interconnectée avec ladite cavité de palier (23), et le sommet dudit cuiseur à vapeur (20) étant interconnecté avec l'embouchure dudit pot interne (10) ; ledit procédé de commande de cuiseurs électriques comprend les étapes suivantes :
un traitement de trempage, pendant lequel l'élément de chauffage (80) dudit cuiseur électrique chauffe le pot interne (10) dudit cuiseur à vapeur, et ladite unité de régulation de pression contrôle la différence de pression entre ladite cavité de palier (23) et la cavité de séparation (30), qui est formée par la surface externe dudit cuiseur à vapeur (20) et la paroi interne dudit pot interne (10), pour pousser l'eau depuis ledit pot interne (10) dans ladite cavité de palier (23) pour tremper le riz contenu au sein de la cavité de palier (23), et après avoir maintenu le trempage jusqu'à un quatrième temps prédéfini (t4), ladite unité de régulation de pression ajuste la différence de pression entre ladite cavité de séparation (30) et ladite cavité de palier (23) pour réaspirer l'eau dans ledit pot interne (10) ;
étape de lavage et de cuisson de riz, pendant laquelle, dans un cycle unique de lavage et de cuisson de riz, ledit élément de chauffage (80) chauffe le pot interne (10) au sein dudit cuiseur électrique jusqu'à ce que ladite unité de détection de débordement (40) entre en contact avec de l'eau bouillante, auquel stade ledit élément de chauffage (80) cesse de fonctionner et le cuiseur continue avec le cycle unique de lavage et de cuisson de riz jusqu'à un premier temps prédéfini (t1) et ce cycle est répété N1 fois ;
cuisson de riz à la vapeur, pendant laquelle ledit élément de chauffage (80) chauffe le pot interne (10) dans ledit cuiseur électrique.

2. Procédé selon la revendication 1, dans lequel pendant ledit traitement de trempage, ledit élément de chauffage (80) est activé et lorsque la température de l'eau dans ledit pot interne (10) atteint une température prédéfinie (T), ladite unité de régulation de pression ajuste la différence de pression entre ladite cavité de séparation (30) et ladite cavité de palier (23), qui pousse l'eau du pot interne (10) dans la cavité de palier (23) pour tremper le riz contenu au sein de la cavité de palier (23) jusqu'au quatrième temps prédéfini (t4), après quoi ladite unité de régulation de pression ajuste la différence de pression entre la cavité de séparation (30) et la cavité de palier (23) pour renvoyer l'eau dans ledit pot interne (10).

3. Procédé selon la revendication 1, dans lequel pendant ledit traitement de trempage, lorsque ledit élément de chauffage (80) est activé, ladite unité de régulation de pression est également activée en même temps pour pousser l'eau dans ladite cavité de palier (23) ; une fois que la température de l'eau dans ledit pot interne (10) atteint une température prédéfinie (T) et que le fonctionnement est maintenu audit quatrième temps prédéfini (t4), ladite unité de régulation de pression ajuste la différence de pression entre ladite cavité de séparation (30) et ladite cavité de palier (23) pour renvoyer l'eau dans ledit pot interne (10).

4. Procédé selon l'une quelconque des revendications 1 à 3, dans lequel dans un cycle unique de lavage et de cuisson de riz, ledit premier temps prédéfini (t1) est d'au moins 3 secondes et d'au plus 150 secondes, et ledit N1 vaut au moins 2 et au plus 100.

5. Procédé selon la revendication 4, dans lequel dans un cycle unique de lavage et de cuisson de riz, ledit premier temps prédéfini (t1) est d'au moins 5 secondes et d'au plus 100 secondes, et ledit N1 vaut au moins 4 et au plus 80. au moins 4 et au plus 80.

6. Procédé selon la revendication 1, dans lequel ledit élément de chauffage (80) chauffe ledit pot interne (10) en continu pendant la période entière de ladite étape de cuisson de riz à la vapeur jusqu'à ce que le riz soit cuit par cuisson à la vapeur.

7. Procédé selon la revendication 1, dans lequel pendant un cycle unique de cuisson de riz à la vapeur, après que ledit élément de chauffage (80) chauffe ledit pot interne (10) jusqu'à un second temps prédéfini (t2), ledit élément de chauffage (80) cesse de fonctionner et le cuiseur continue avec la cuisson de riz à la vapeur jusqu'à un troisième temps prédéfini (t3), et ce cycle de cuisson de riz à la vapeur est répété N2 fois.

8. Procédé selon la revendication 7, dans lequel dans un cycle unique de cuisson de riz à la vapeur, ledit second temps prédéfini (t2) est d'au moins 3 secondes et d'au plus 150 secondes, ledit troisième temps prédéfini (t3) est d'au moins 3 secondes et d'au plus 150 secondes, et ledit N2 vaut au moins 2 et au plus 100.

9. Procédé selon la revendication 8, dans lequel ledit N2 vaut au moins 4 et au plus 80.

10. Procédé selon la revendication 7, dans lequel l'étape entière de cuisson de riz à la vapeur est divisée en l'étape préliminaire de cuisson de riz à la vapeur et l'étape finale de cuisson de riz à la vapeur selon une séquence dans le temps, et
pendant ladite étape préliminaire de cuisson de riz à la vapeur, ledit élément de chauffage (80) chauffe le pot interne (10) dans ledit cuiseur électrique pendant un second temps prédéfini (t2) appelé t21 ;
pendant ladite étape finale de cuisson de riz à la vapeur, ledit élément de chauffage (80) chauffe le pot interne (10) dans ledit cuiseur électrique pendant un second temps prédéfini (t2) appelé t22, dans lequel t21 est plus long que t22.

11. Procédé selon la revendication 10, dans lequel ledit t21 est d'au moins 3 secondes et d'au plus 150 secondes, et ledit t22 est d'au moins 3 secondes et d'au plus 150 secondes.

12. Procédé selon la revendication 2 ou 3, dans lequel pendant ledit traitement de trempage, ledit quatrième temps prédéfini (t4) est d'au moins 120 secondes et d'au plus 1200 secondes, et ladite température prédéfinie (T) est d'au moins 30 degrés Celsius et d'au plus 95 degrés Celsius.

13. Procédé selon la revendication 12, dans lequel pendant ledit traitement de trempage, ledit quatrième temps prédéfini (t4) est d'au moins 600 secondes et d'au plus 900 secondes, et ladite température prédéfinie (T) est d'au moins 60 degrés Celsius et d'au plus 80 degrés Celsius.

14. Procédé selon la revendication 12, dans lequel pendant ledit traitement de trempage, ledit cuiseur électrique surveille la température de l'eau en utilisant ladite unité de détection de débordement (40).

15. Procédé selon la revendication 12, dans lequel pendant ledit traitement de trempage, lorsque ladite unité de détection de débordement (40) ne parvient pas à entrer en contact avec de l'eau dans le délai d'alarme prédéfini, ladite unité de détection de débordement (40) envoie un signal d'alarme, et le contrôleur dudit cuiseur électrique reçoit ce signal d'alarme et contrôle le déclenchement de l'alarme par l'élément d'alarme dans ledit cuiseur électrique.

16. Procédé selon l'une quelconque des revendications 1 à 3, dans lequel pendant ledit traitement de trempage, après que ladite unité de régulation de pression est activée, il fait monter la pression à l'intérieur de ladite cavité de séparation (30) jusqu'à une première pression prédéfinie (P1) ou il fait descendre la pression au sein de ladite cavité de palier (23) jusqu'à une seconde pression prédéfinie (P2).

17. Procédé selon la revendication 16, dans lequel ladite première pression prédéfinie (P1) est d'au moins 5 Pa et d'au plus 1500 Pa, et ladite seconde pression prédéfinie (P2) est d'au moins -5000 Pa et d'au plus -5 Pa.

18. Procédé selon la revendication 17, dans lequel ladite première pression prédéfinie (P1) est d'au moins 10 Pa et d'au plus 1100 Pa.
